# EUROPEAN PATENT APPLICATION

(11) **EP 4 400 222 A1**
(43) Date of publication of application: **17.07.2024**
(21) Application number: 22950451.9
(22) Date of filing: 29.11.2022
(51) Int. Cl.: B05C 5/02, H01M 4/04

(54) **COATING DIE AND COATING DEVICE**

(71) Applicant: Contemporary Amperex Technology Co., Limited, Ningde, Fujian 352100 (CN)
(72) Inventor: ZHANG, Shengwu, Ningde, Fujian 352100 (CN); LIU, Xuyong, Ningde, Fujian 352100 (CN); SHANG, Hongwu, Ningde, Fujian 352100 (CN); LI, Shisong, Ningde, Fujian 352100 (CN)
(74) Representative: Rowlands, Stuart Michael
(86) International application number: PCT/CN2022/134992
(87) International publication number: WO 2024/113156

(57) **Abstract**

A coating die head and a piece of coating equipment containing the coating die head are disclosed. The coating die head includes a die head body and at least two regulators. A discharge channel communicating with an external environment is disposed on the die head body. The discharge channel includes a discharge port. The discharge port extends along a first direction. The first direction intersects a discharge direction of the discharge channel. The at least two regulators are disposed on the die head body and distributed along the first direction. At least a part of each regulator is movable in the discharge channel along a second direction. The second direction is perpendicular to the discharge direction and the first direction. A dimension along the first direction differs between the at least two regulators. The coating die head can improve delicacy and accuracy of thickness adjustment of a coating layer.

## Description

### TECHNICAL FIELD

This application relates to the technical field of coating equipment, and in particular, to a coating die head and a piece of coating equipment that employs the coating die head.

### BACKGROUND

In a production process of batteries, a prepared paste-like viscous slurry usually needs to be applied onto a substrate by use of coating equipment. In a practical coating process, depending on the desired coating thickness at different positions after coating, a thinned region is sometimes formed at edges of the slurry to avoid problems such as edge bulging, that is, the thickness of an edge region on either side of a coating layer formed by the slurry is greater than the thickness of a middle region. The degree of precision of the thickness of the applied slurry directly affects the performance of a battery. Therefore, a coating die head capable of accurate thickness adjustment is urgently needed.

### TECHNICAL PROBLEMS

A main objective of this application is to provide a coating die head, so as to make pertinent adjustment for different regions of a coating layer on a basis of implementing thickness adjustment for the coating layer, and improve delicacy and accuracy of thickness adjustment of the coating layer.

### TECHNICAL SOLUTIONS

To achieve the foregoing objective, the coating die head disclosed in this application includes:
a die head body, where a discharge channel communicating with an external environment is disposed on the die head body, the discharge channel includes a discharge port, the discharge port extends along a first direction, and the first direction intersects a discharge direction of the discharge channel; and
at least two regulators, where the at least two regulators are disposed on the die head body and distributed along the first direction, at least a part of each regulator is movable in the discharge channel along a second direction, the second direction is perpendicular to the discharge direction and the first direction, and a dimension along the first direction differs between the at least two regulators.

In an embodiment of this application, the discharge channel includes a main coating region and an edge region in the first direction. The edge region is located at an edge of the main coating region. The regulator is disposed in both the main coating region and the edge region.

In this way, the regulator is disposed in both the main coating region and the edge region, so that the coating thicknesses in both the main coating region and the edge region can be adjusted, thereby improving the flexibility of adjusting the coating thicknesses in different regions.

In an embodiment of this application, in the first direction, a length value of the regulator located in the main coating region is set to be different from a length value of the regulator located in the edge region.

In this way, the length of the regulator can be adaptively adjusted more delicately in view of the size of the main coating region and the size of the edge region, so as to make more pertinent adjustment for the main coating region and the edge region.

In an embodiment of this application, in the first direction, the length value of the regulator located in the main coating region is greater than the length value of the regulator located in the edge region.

In this case, the coating thickness in the main coating region can be quickly adjusted by a regulator with a relatively large length, and it is convenient to ensure relatively high consistency of the coating thickness in the main coating region. At the same time, the coating thickness in the edge region can be tuned more finely by a regulator with a relatively small length. In other words, the coating layer in the edge region is subdivided into regions so that the coating thickness in the edge region is adjusted to the desired range more delicately.

In an embodiment of this application, a number of the regulators located in the main coating region is less than a number of the regulators located in the edge region.

In this case, the number of regulators located in the main coating region is relatively small, thereby minimizing fluctuation of the coating weight caused by frequent adjustment, and ensuring higher consistency of the coating thickness in the main coating region. The number of regulators located in the edge region is relatively large, thereby enabling finer tuning for coating thicknesses at different positions in the edge region.

In an embodiment of this application, a plurality of regulators are disposed in the main coating region. In the first direction, length values of the regulators located in the main coating region are set to be all identical or partially identical.

In this way, the lengths of regulators in the main coating region are at least partially identical, thereby improving the uniformity and consistency of such regulators, and in turn, improving the convenience of processing and molding the regulators.

In an embodiment of this application, a plurality of regulators are disposed in the edge region. In the first direction, length values of the regulators located in the edge region are set to be all identical.

In this way, the lengths of regulators in the edge region are identical, thereby improving the uniformity of such regulators, and in turn, improving the convenience of processing and molding the regulators.

In an embodiment of this application, the coating die head further includes at least two driving assemblies. The at least two driving assemblies are all disposed on an outer surface of the die head body. The driving assembly is configured to drive the regulator to move.

In this way, the driving assemblies are disposed on the outer surface of the die head body, thereby making it convenient to drive adjustment, and facilitating subsequent maintenance and other operations on the driving assemblies.

In an embodiment of this application, the coating die head further includes a connecting piece. The connecting piece connects the driving assembly and the regulator. The die head body further includes a communicating hole that communicates with the discharge channel. The connecting piece passes through the communicating hole and is connected to the regulator.

In this way, the driving piece is connected to the regulator by the connecting piece to implement indirect connection between the driving piece and the regulator, thereby avoiding complicated configuration of the driving piece located outside the die head body and the regulator located inside the die head body caused by a long distance between the driving piece and the regulator.

In an embodiment of this application, the driving assembly includes:
a mounting piece, where the mounting piece is disposed on the die head body; and
a driving piece, where the driving piece is connected to the mounting piece and connected to the connecting piece, and the driving piece is able to drive the connecting piece to move, so as to cause the regulator to move.

In this way, the mounting piece provides a mounting position for the driving piece, and is configured to be connected to the die head body, thereby facilitating the mounting of the driving assemblies on the die head body.

In an embodiment of this application, a mounting hole is created on the mounting piece. The driving piece is rotatably threaded through the mounting hole. One of a threaded section or a threaded hole is formed at an end of the driving piece, the end being close to the regulator.

The other of the threaded section or the threaded hole is formed at an end of the connecting piece, the end being away from the regulator. The threaded section is inserted in the threaded hole so that, when rotating, the driving piece drives the connecting piece to move.

In this way, the driving piece is threadedly connected to the connecting piece, thereby simplifying the structure of the driving piece, and improving the convenience of manufacturing the driving piece. In addition, the driving relationship between the driving piece and the connecting piece is implemented by a pure mechanical structure, without involving circuits or gas paths or the like, thereby improving safety of the coating die head in use.

In an embodiment of this application, the driving piece includes the threaded section, and the connecting piece includes the threaded hole.

The mounting piece further includes a guide hole. The guide hole communicates with the mounting hole and is coaxial with the mounting hole. An end of the connecting piece, at which the threaded hole is created, is inserted in the guide hole.

In this way, the guide hole can guide the movement of the connecting piece, so that the regulator connected to the connecting piece can stably and effectively adjust a discharge flow rate of the discharge channel.

In an embodiment of this application, a mounting groove is created on an inner wall of the discharge channel. The mounting groove communicates with the communicating hole. The regulator is disposed in the mounting groove.

In this way, the mounting groove provides a mounting space for the regulator, so as to improve convenience of disposing the regulator. Moreover, the mounting groove enables a relatively large size of the regulator, thereby increasing the strength of the regulator and making it convenient for the regulator to make stable adjustment subsequently.

In an embodiment of this application, the coating die head further includes a sealing element. The sealing element is disposed between the regulator and a wall of the mounting groove, and the wall communicates with the communicating hole.

In this way, the sealing element exerts a sealing effect. Even if an amount of slurry enters the mounting groove, the sealing effect of the sealing element prevents the slurry from further penetrating into the communicating hole.

In an embodiment of this application, in the first direction, a length value of the mounting piece in each of the driving assemblies is identical to a length value of a corresponding regulator.

In this way, the mounting pieces are in one-to-one correspondence with the regulators, and the length value is the same between the corresponding mounting piece and regulator, thereby making it convenient to also implement an accurate correspondence between the driving piece disposed on the mounting piece and the regulator, and in turn, exerting an adjustment effect effectively. In addition, the operator is facilitated to quickly determine, based on the correspondence, a driving piece that needs to be operated, so as to adjust the regulator that needs to be adjusted.

In an embodiment of this application, the mounting piece in each of the driving assemblies is detachably disposed on the die head body.

In this way, the mounting piece is detachable, regulators of different sizes can be used through replacement, and the coating equipment can be conveniently adapted to coating layers of various sizes, thereby improving the flexibility of use of the coating equipment. In addition, when damaged, the driving assembly or regulator may be detached for repair or replacement, thereby improving the convenience of repair and replacement.

In an embodiment of this application, the coating die head further includes a fixing bracket. The fixing bracket includes:
a fixed base, where the fixed base is disposed on the die head body; and
a press plate, where the press plate is detachably connected to the fixed base, and coordinates with the fixed base to clamp and fix the mounting piece in each of the driving assemblies.

In this way, the mounting piece is clamped and mounted by the fixing bracket and the press plate, and no connecting structure for mounting the mounting piece needs to be disposed on the mounting piece, thereby ensuring high strength of each mounting piece. Moreover, after all mounting pieces are mounted onto the fixed base to form a structure, this structure may be mounted onto the die head body at a single time, thereby improving the convenience of mounting the structure.

In an embodiment of this application, the fixed base, and the press plate close in to form an accommodation cavity. The mounting piece is accommodated in the accommodation cavity.

The fixed base includes a first relief hole that communicates with the accommodation cavity. An end of the connecting piece, away from the regulator, passes through the first relief hole, so as to be connected to a driving piece.

The press plate includes a second relief hole that communicates with the accommodation cavity. An end of the driving piece, away from the connecting piece, passes through the second relief hole, so as to extend to the external environment.

In this way, the accommodating cavity can adaptively accommodate each mounting piece, thereby improving the stability of the mounting of each mounting piece, and making it convenient for the driving assembly to stably and effectively drive the regulator subsequently.

In an embodiment of this application, the coating die head includes:
a first die head; and
a second die head, where the second die head is detachably connected to the first die head, the second die head and the first die head close in to form the discharge channel, and the driving assemblies and the communicating hole are disposed on the first die head and/or the second die head.

In this way, because the die head body is split into the first die head and the second die head, the two die heads can be manufactured separately and then assembled into a whole. The structures of the first die head and the second die head obtained by splitting are simplified, thereby improving the convenience of manufacturing the die head body. In addition, the first die head and the second die head are detachably connected. Therefore, when the regulator is damaged or the discharge channel is jammed or the like, the first die head and the second die head can be detached, thereby improving the convenience of maintenance for the regulators and the discharge channel.

In an embodiment of this application, in the discharge direction of the discharge channel, the discharge channel includes a body section and an outlet section that communicate with each other. The discharge port is created at an end of the outlet section, the end being away from the body section.

A cross-sectional area of the outlet section of the discharge channel is less than a cross-sectional area of the body section of the discharge channel. At least a part of the regulator is movable within the outlet section.

In this way, because the outlet section is closer to the outlet than the body section, after the slurry flow rate in a specified region is adjusted by the regulator, the slurry can be quickly extruded from the discharge port to form a coating layer of a desired thickness, thereby being not prone to inflow of slurry from other positions.

This application further discloses a piece of coating equipment containing the coating die head according to any one of the embodiments described above.

### BENEFICIAL EFFECTS

When the coating die head in this technical solution is in use, the slurry can flow from the discharge channel to the discharge port. After being extruded from the discharge port, the slurry can be applied to a substrate-to-be-coated, thereby completing the coating for the substrate. Moreover, at least two regulators of the coating die head in this technical solution differ in dimension in the first direction. Therefore, during thickness adjustment for different regions of the coating layer, pertinent adjustment can be made based on the regulators corresponding to the regions. For example, the thickness adjustment for a main middle region of the coating layer may be performed by using a regulator of a relatively large size. The thickness adjustment for the edge region of the coating layer may be performed by using a regulator of a relatively small size. In this way, the coating thicknesses in different regions are adjusted more delicately and accurately by the regulators of different lengths. Therefore, the coating die head in this technical solution makes pertinent adjustment for different regions of the coating layer on the basis of implementing thickness adjustment for the coating layer, thereby improving delicacy and accuracy of thickness adjustment of the coating layer.

### BRIEF DESCRIPTION OF DRAWINGS

To describe the technical solutions in some embodiments of this application or the prior art more clearly, the following outlines the drawings to be used in the description of some embodiments of this application or the prior art. It will be apparent that the drawings outlined below are merely a part of embodiments of this application. A person of ordinary skill in the art may derive other drawings from the illustrated structure without making any creative effort.
FIG. 1 is a schematic structural diagram of a coating die head stripped of a press plate according to an embodiment of this application;
FIG. 2 is a cross-sectional schematic view of a coating die head according to this application;
FIG. 3 is a schematic diagram of a partial structure of a coating die head according to this application;
FIG. 4 is a corresponding schematic diagram of regulators, a substrate, and a coating layer of the coating die head shown in FIG. 3;
FIG. 5 is a schematic exploded view of a fixing bracket and driving assemblies of a coating die head according to this application;
FIG. 6 is a schematic diagram of a partial structure of a fixed base of a fixing bracket of a coating die head according to this application;
FIG. 7 is a schematic exploded view of driving assemblies, a connecting piece, and regulators of a coating die head according to this application; and
FIG. 8 is a schematic structural diagram of a die head body of a coating die head according to this application.

### List of reference numerals:

| Reference numeral | Name | Reference numeral | Name |
|---|---|---|---|
| 100 | coating die head | 31 | mounting piece |
| 10 | die head body | 311 | mounting hole |
| 11 | discharge channel | 313 | guide hole |
| 111 | discharge port | 33 | driving piece |
| 112 | main coating region | 331 | threaded section |
| 113 | edge region | 40 | connecting piece |
| 114 | mounting groove | 41 | threaded hole |
| 115 | body section | 50 | sealing element |
| 116 | outlet section | 60 | fixing bracket |
| 12 | communicating hole | 61 | fixed base |
| 13 | first die head | 611 | first relief hole |
| 15 | second die head | 63 | press plate |
| 20 | regulator | 631 | second relief hole |
| 30 | driving assembly | 65 | accommodation cavity |

The objective fulfillment, functional characteristics, and advantages of this application will be described in more detail with reference to the drawings.

### DETAILED DESCRIPTION OF EMBODIMENTS

The following clearly and thoroughly describes the technical solutions in some embodiments of this application with reference to the drawings appended hereto. It will be apparent that the described embodiments are merely a part of but not all of the embodiments of this application. All other embodiments derived by a person of ordinary skill in the art based on the embodiments of this application without making any creative efforts still fall within the protection scope of this application.

It is hereby noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

In this application, unless otherwise expressly specified and qualified, the terms such as "connection" and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In addition, the terms such as "first" and "second" used herein are merely intended for ease of description, but not understood as indicating or implying priority or implicitly specifying the number of technical features mentioned. Therefore, the features preceded by "first" or "second" may explicitly or implicitly include at least one of such features. In addition, the term "and/or" used herein means three parallel solutions. For example, "A and/or B" means A, or B, or both A and B. In addition, the technical solutions of different embodiments may be combined with each other to the extent practicable by a person of ordinary skilled in the art. When a combination of technical solutions is contradictory or impracticable, the combination of technical solutions is considered to be nonexistent and fall outside the protection scope claimed by this application.

The applicant hereof finds that, in a variety of coating processes such as a production process of batteries, a prepared paste-like viscous slurry usually needs to be applied onto a substrate by use of coating equipment. In a practical coating process, depending on the desired coating thickness at different positions after coating, a thinned region is sometimes formed at edges of the slurry to avoid problems such as edge bulging, that is, the thickness of an edge region on either side of a coating layer formed by the slurry is greater than the thickness of a middle region. The degree of precision of the thickness of the applied slurry directly affects the performance of a battery. Therefore, a coating die head capable of accurate thickness adjustment is urgently needed.

Based on the above considerations, in order to regulate the coating thickness, the applicant discloses a novel coating die head. On this basis, by disposing regulators of different sizes, different regions of the coating layer are adjusted pertinently, so as to improve the adjustment precision for different regions of the coating layer and achieve higher uniformity of coating.

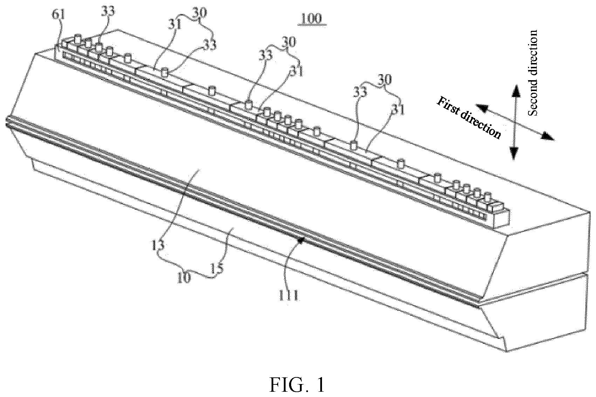

In an embodiment of this application, referring to FIG. 1 to FIG. 3, the coating die head 100 includes a die head body 10 and at least two regulators 20. A discharge channel 11 communicating with an external environment is disposed on the die head body 10. The discharge channel 11 includes a discharge port 111. The discharge port 111 extends along a first direction. The first direction intersects a discharge direction of the discharge channel 11. The at least two regulators 20 are disposed on the die head body 10 and distributed along the first direction. At least a part of each regulator 20 is movable in the discharge channel 11 along a second direction. The second direction is perpendicular to the discharge direction and the first direction. A dimension along the first direction differs between the at least two regulators 20.

The above die head body 10 may be used as a main structure of the coating die head 100, so as to form the discharge channel 11 and allow mounting of at least two regulators 20 and the like. The discharge channel 11 further includes a feed-in port. The slurry to be applied may enter the discharge channel 11 from the feed-in port, and then be extruded from the discharge port 111 onto the substrate, thereby completing the coating process for the substrate. Because the substrate to be applied is usually large in width, the discharge port 111 on the die head body 10 may extend along the first direction to form an elongated shape, that is, may extend along the width direction of the substrate. In this case, the die head body 10 is also an elongated structure accordingly. The length direction of the die head body may be the first direction, the width direction of the die head body may be the discharge direction of the discharge channel 11, and the height direction of the die head body may be a movement direction of the regulator 20, that is, the second direction. However, this application is not limited to the examples given above. In another embodiment, the die head body 10 may be a roughly cubic structure. That is, the dimension of the die head body 10 in the first direction is the same as the dimension in the discharge direction.

The regulator 20 may be configured to adjust the discharge flow rate of the discharge channel 11. Specifically, the regulator 20 may be at least partially located in the discharge channel 11 when moving, and the movement direction of the regulator 20 is still perpendicular to the discharge direction and the first direction, that is, the regulator still moves along the height direction of the die head body 10. In this way, during movement of the regulator 20, the cross-sectional area of this region of the discharge channel available for the slurry to pass through can be adjusted. For example, when the regulator 20 moves downward, the cross-sectional area of the discharge channel 11 at a region corresponding to the regulator 20 is decreased, so that the flow rate of the slurry passing through this region is decreased, and ultimately, the coating thickness of the coating region corresponding to the regulator 20 on the substrate is decreased. When the regulator 20 moves up and down, the cross-sectional area of the discharge channel 11 at a region corresponding to the regulator 20 is increased, so that the flow rate of the slurry passing through this region is increased, and ultimately, the coating thickness of the coating region corresponding to the regulator 20 on the substrate is increased. Therefore, by driving different regulators 20 to move, the coating thicknesses in the corresponding regions on the substrate can be adjusted. The regulator 20 may be partially disposed in the discharge channel 11; or, the regulator 20 may be entirely disposed in the discharge channel 11. Alternatively, the entire regulator 20 may be disposed outside the discharge channel 11 to ensure that the regulator 20 can move in the discharge channel 11 during subsequent movement to adjust the flow rate of the slurry. In addition, the movement of the regulator 20 may be manually driven by an operator, or may be automatically driven by a cylinder or a linear module or the like. The driving manner is not particularly limited herein. In addition, the number of regulators 20 may be two, three or more, as long as the regulators are distributed sequentially in the first direction. The regulator 20 may be a block structure, a plate structure, a column structure, or the like, as long as the regulator can adjust the discharge flow rate of the discharge channel 11 during the movement.

When the coating die head 100 in this technical solution is in use, the slurry can flow from the discharge channel 11 to the discharge port 111. After being extruded from the discharge port 111, the slurry can be applied to a substrate-to-be-coated, thereby completing the coating for the substrate. Moreover, at least two regulators 20 of the coating die head 100 in this technical solution differ in dimension in the first direction. Therefore, during thickness adjustment for different regions of the coating layer, pertinent adjustment can be made based on the regulators 20 corresponding to the regions. For example, the thickness adjustment for a main middle region of the coating layer may be performed by using a regulator 20 of a relatively large size. The thickness adjustment for the edge region of the coating layer may be performed by using a regulator 20 of a relatively small size. In this way, the coating thicknesses in different regions are adjusted more delicately and accurately by the regulators 20 of different lengths. Therefore, the coating die head in this technical solution makes pertinent adjustment for different regions of the coating layer on the basis of implementing thickness adjustment for the coating layer, thereby improving delicacy and accuracy of thickness adjustment of the coating layer.

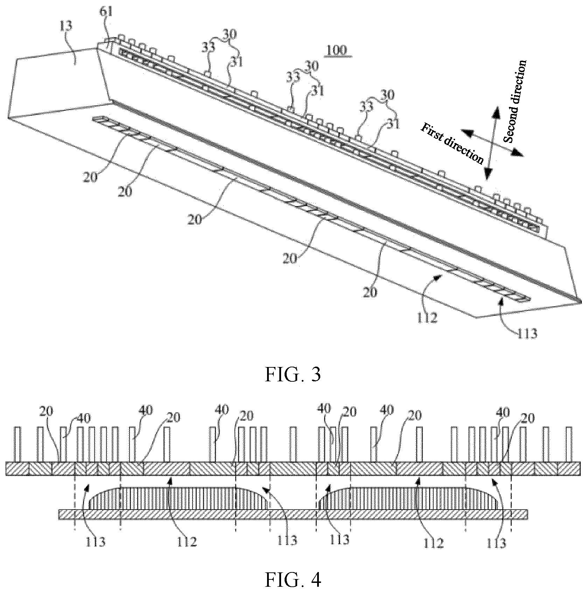

Referring to FIG. 3 and FIG. 4, in an embodiment of this application, the discharge channel 11 includes a main coating region 112 and an edge region 113 in the first direction. The edge region 113 is located at an edge of the main coating region 112. The regulator 20 is disposed in both the main coating region 112 and the edge region 113.

The main coating region 112 is a position corresponding to the middle part of the coating layer. The middle part of the coating layer is formed by the slurry in the main coating region 112 from the discharge channel 11. The edge region 113 is a position corresponding to the edge part of the coating layer. The edge of the coating layer is formed by the slurry in the edge region 113 from the discharge channel 11. The coating layer includes edges on two opposite sides in the first direction (that is, the width direction of the coating layer). Therefore, the edge region 113 may be formed on both of the two opposite sides of the main coating region 112 in the first direction.

In this embodiment, the regulator 20 is disposed in both the main coating region 112 and the edge region 113. In this way, not only can the coating thickness in the edge region 113 be adjusted, but the coating thickness in the main coating region 112 can also be adjusted, thereby improving the flexibility of adjusting the coating thicknesses in different regions. However, it is hereby noted that this application is not limited to the examples given above. In another embodiment, the regulator 20 may be disposed in the edge region 113.

Referring to FIG. 3 and FIG. 4, in an embodiment of this application, in the first direction, a length value of the regulator 20 in the main coating region 112 is set to be different from a length value of the regulator 20 in the edge region 113.

The length value of the regulator 20 in the main coating region 112 being set to be different from the length value of the regulator 20 in the edge region 113 means that the length of the regulator 20 in the main coating region 112 in the first direction can be set adaptively based on the length of the main coating region 112 in the first direction, and the length of the regulator 20 in the edge region 113 in the first direction can be adaptively set based on the length of the edge region 113 in the first direction, so that the length of the regulator 20 in the main coating region 112 differs from the length of the regulator 20 in the edge region 113.

In this embodiment, by setting the length of the regulator 20 in the main coating region 112 and the length of the regulator in the edge region 113 separately, the length of the regulator 20 can be adaptively adjusted more delicately in view of the size of the main coating region 112 and the size of the edge region 113, so as to make more pertinent adjustment for the main coating region 112 and the edge region 113. However, it is hereby noted that, this application is not limited to the examples given above. In another embodiment, the length value of the regulator 20 in the main coating region 112 may be set to be the same as the length value of the regulator 20 in the edge region 113.

Referring to FIG. 3 and FIG. 4, in an embodiment of this application, in the first direction, the length value of the regulator 20 in the main coating region 112 is greater than the length value of the regulator 20 in the edge region 113.

The length value of the regulator 20 in the main coating region 112 being greater than the length value of the regulator 20 in the edge region 113 means that, when both the number of regulators 20 in the main coating region 112 and the number of regulators 20 in the edge region 113 are one, the length of the regulator 20 in the main coating region 112 is greater than the length of the regulator 20 in the edge region 113; and, when both the number of regulators 20 in the main coating region 112 and the number of regulators in the edge region 113 are plural, the length of the shortest regulator 20 in the main coating region 112 is greater than the length of the longest regulator 20 in the edge region 113.

In this embodiment, the length value of the regulator 20 in the main coating region 112 is relatively large, and the length value of the regulator 20 in the edge region 113 is relatively small, so as to adapt to the circumstance that the dimension of the main coating region 112 is greater than the dimension of the edge region 113 in the first direction. In this case, the coating thickness in the main coating region 112 that is relatively large in dimension in the first direction can be quickly adjusted by a regulator 20 with a relatively large length, and it is convenient to ensure relatively high consistency of the coating thickness in the main coating region 112. At the same time, the coating thickness in the edge region 113 that is relatively small in dimension in the first direction can be tuned more finely by a regulator 20 with a relatively small length. In other words, the coating layer in the edge region 113 is subdivided into regions so that the coating thickness in the edge region 113 is adjusted to the desired range more delicately. When both the number of regulators 20 in the main coating region 112 and the number of regulators 20 in the edge region 113 are plural, the length of the shortest regulator 20 in the main coating region 112 is also greater than the length of the longest regulator 20 in the edge region 113. In this way, the thickness of the edge region 113 that is small in dimension can be controlled more precisely, and the problem of edge bulging can be alleviated.

Further, to implement finer tuning of the thickness of the coating layer corresponding to the edge region 113, in an embodiment, the number of the regulators 20 located in the main coating region 112 may be less than the number of the regulators 20 located in the edge region 113. In this case, the number of regulators 20 located in the main coating region 112 is relatively small, thereby minimizing fluctuation of the coating weight caused by frequent adjustment, and ensuring higher consistency of the coating thickness in the main coating region 112. The number of regulators 20 located in the edge region 113 is relatively large, thereby enabling finer tuning for coating thicknesses at different positions in the edge region 113.

Referring to FIG. 4, in an embodiment of this application, a plurality of regulators 20 are disposed in the main coating region 112. In the first direction, length values of the regulators 20 located in the main coating region 112 are set to be all identical or partially identical.

The length values of the regulators 20 in the main coating region 112 being set to be all identical or partially identical means that all regulators 20 in the main coating region 112 may have the same length value, or just two of the regulators 20 have the same length value.

In this embodiment, the lengths of the regulators 20 in the main coating region 112 are set to be identical, thereby improving the uniformity and consistency of such regulators 20, and in turn, improving the convenience of processing and molding the regulators. When the lengths of some of the regulators 20 are set to be identical, such regulators 20 are caused to be relatively consistent, thereby facilitating processing of the regulators. In addition, by coordinating the regulators 20 of different lengths, it is also convenient to achieve a match between the overall length of the plurality of regulators 20 in the main coating region 112 and the length of the main coating region 112. However, it is hereby noted that, this application is not limited to the examples given above. In another embodiment, the length values of the regulators 20 in the main coating region 112 may be set to be different.

Referring to FIG. 4, in an embodiment of this application, a plurality of regulators 20 are disposed in the edge region 113. In the first direction, the length values of the regulators 20 in the edge region 113 are set to be all identical.

The length values of the regulators 20 in the edge region 113 being set to be all identical means that all regulators 20 in the edge region 113 may have the same length value.

In this embodiment, the length values of the regulators 20 in the edge region 113 are set to be identical, thereby also improving the consistency of such regulators 20, and in turn, improving the convenience of processing and molding the regulators. However, it is hereby noted that, this application is not limited to the examples given above. In another embodiment, in the first direction, the length values of the regulators 20 in the edge region 113 may be set to be different or just partially identical.

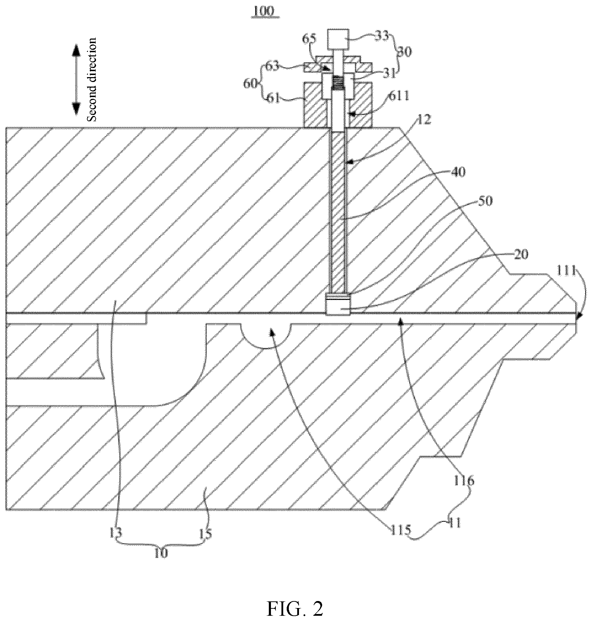

Referring to FIG. 1 and FIG. 2, in an embodiment of this application, the coating die head 100 further includes at least two driving assemblies 30. The at least two driving assemblies 30 are all disposed on an outer surface of the die head body 10. The driving assemblies 30 are configured to drive the regulators 20 to move.

The driving assemblies 30 may be configured to drive the regulators 20 to move, and each driving assembly 30 drives a corresponding regulator 20 to move. The driving assemblies 30 are disposed on the outer surface of the die head body 10, that is, disposed outside the die head body 10 so that the driving assemblies 30 can be exposed to the external environment. The driving assemblies 30 may be a cylinder or a linear motor described above, so as to implement automatic driving of the regulator 20; or, may be a structure with a threaded section 331 or a threaded hole 41 as described below. The threaded section 331 fits the threaded hole 41 to implement manual driving for the regulator 20.

In this embodiment, the driving assemblies 30 are disposed on the outer surface of the die head body 10, thereby making it convenient to drive adjustment, and facilitating subsequent maintenance and other operations on the driving assemblies. However, it is hereby noted that this application is not limited to the examples given above. In another embodiment, the driving assemblies 30 may be disposed in the die head body 10, that is, disposed in an accommodation space that communicates with the discharge channel 11.

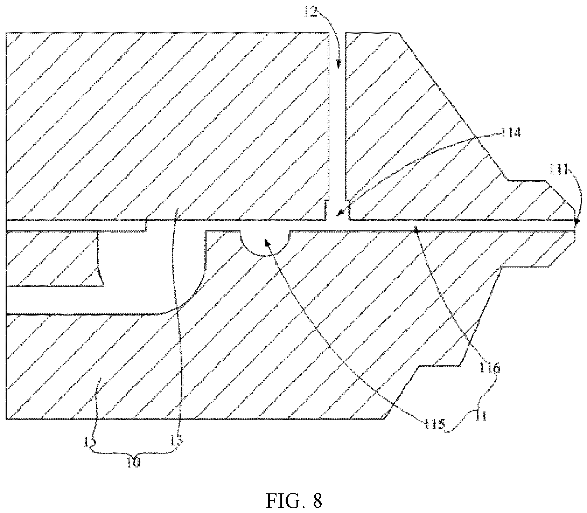

Referring to FIG. 2 and FIG. 8, in an embodiment of this application, the coating die head 100 further includes a connecting piece 40. The connecting piece 40 connects the driving assembly 30 and the regulator 20. The die head body 10 further includes a communicating hole 12 that communicates with the discharge channel 11. The connecting piece 40 passes through the communicating hole 12 and is connected to the regulator 20.

The communicating hole 12 may communicate with the discharge channel 11 and the external environment, thereby making it convenient for the connecting piece 40 to pass through. One end of the connecting piece 40 may be connected to the driving assembly 30, and the other end that is opposite may be connected to the regulator 20. In this way, after driving the connecting piece 40 to move, the driving assembly 30 can induce movement of the regulator 20 connected to the connecting piece 40, whereby the driving assembly 30 drives the regulator 20 indirectly.

In this embodiment, the driving piece 33 is connected to the regulator 20 by the connecting piece 40 to implement indirect connection between the driving piece 33 and the regulator 20, thereby avoiding complicated configuration of the driving piece 33 located outside the die head body 10 and the regulator 20 located inside the die head body 10 caused by a long distance between the driving piece and the regulator. However, it is hereby noted that this application is not limited to the examples given above. In another embodiment, a part of the structure of the driving assembly 30 may pass through the communicating hole 12 to get connected to the regulator 20. Alternatively, a part of the structure of the regulator 20 may pass through the communicating hole 12 to get connected to the driving assembly 30.

In some embodiments of this application, a plurality of connecting pieces 40 may be disposed in one communicating hole 12 to facilitate adjustment of the dimensions of the regulator 20 to fit different coating gasket widths. Moreover, such arrangement makes the number of communicating holes 12 very small, and in turn, improves the convenience of processing and molding the die head body 10.

Referring to FIG. 2, in an embodiment of this application, the driving assembly 30 includes a mounting piece 31 and a driving piece 33. The mounting piece 31 is disposed on the die head body 10. The driving piece 33 is connected to the mounting piece 31 and connected to the connecting piece 40. The driving piece 33 is able to drive the connecting piece 40 to move, so as to cause the regulator 20 to move.

The mounting piece 31 may be configured to provide a mounting position at which the driving piece 33 is to be mounted. In addition, the mounting piece 31 may be further configured to be connected to the die head body 10, so as to enable the mounting of the driving assemblies 30 on the die head body 10. Alternatively, the mounting piece 31 may be a plate structure, a column structure, or a rack structure formed by a plurality of enclosing plates, or the like. The specific structural shape of the mounting piece 31 is not limited herein as long as the structure can be used for mounting the driving piece 33 and connected to the die head body 10. The driving piece 33 may be configured to drive the connecting piece 40 to move, and may be a cylinder, a linear motor, or a structure containing a threaded section 331 or a threaded hole 41 as mentioned above.

In this embodiment, the mounting piece 31 enables connection to the die head body 10, thereby making it convenient to dispose a corresponding connection structure on the mounting piece 31, and improving the convenience of mounting the driving assembly 30 on the die head body 10. However, it is hereby noted that this application is not limited to the examples given above. In another embodiment, the driving piece 33 may be disposed on the die head body 10 directly.

Referring to FIG. 2, FIG. 5, and FIG. 7, in an embodiment of this application, a mounting hole 311 is created on the mounting piece 31. The driving piece 33 is rotatably threaded through the mounting hole 311. One of a threaded section 331 or a threaded hole 41 is formed at an end of the driving piece 33, the end being close to the regulator 20. The other of the threaded section 331 or the threaded hole 41 is formed at an end of the connecting piece 40, the end being away from the regulator 20. The threaded section 331 is inserted in the threaded hole 41 so that, when rotating, the driving piece 33 drives the connecting piece 40 to move.

One of the threaded section 331 or the threaded hole 41 is disposed on the driving piece 33, and the other of the threaded section 331 or the threaded hole 41 is disposed on the connecting piece 40. In this way, when the driving piece 33 rotates, due to the fit between the threaded section 331 and the threaded hole 41, because the connecting piece 40 is connected to the regulator 20, the connecting piece 40 is unable to rotate along with the driving piece 33. Therefore, the connecting piece can move along the axial direction of the connecting piece, and induces movement of the regulator 20 connected to the connecting piece 40. The threaded section 331 is disposed on the driving piece 33, and the threaded hole 41 is disposed on the connecting piece 40; or, the threaded hole 41 is disposed on the driving piece 33, and the threaded section 331 is disposed on the connecting piece 40. The connecting piece 40 may be a cylindrical structure, and extends along the movement direction of the regulator 20.

In this embodiment, the driving piece 33 is threadedly connected to the connecting piece 40, thereby simplifying the structure of the driving piece 33, and improving the convenience of manufacturing the driving piece. In addition, the driving relationship between the driving piece 33 and the connecting piece 40 is implemented by a pure mechanical structure, without involving circuits or gas paths or the like, thereby improving safety of the coating die head 100 in use.

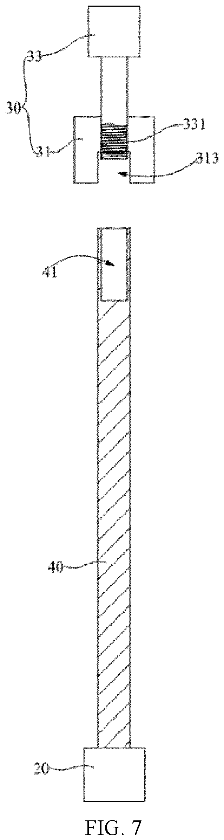

Referring to FIG. 7, in an embodiment of this application, when the threaded section 331 is disposed on the driving piece 33 and the threaded hole 41 is disposed on the connecting piece 40, the mounting piece 31 further includes a guide hole 313. The guide hole 313 communicates with the mounting hole 311 and is coaxial with the mounting hole 311. An end of the connecting piece 40, at which the threaded hole 41 is created, is inserted in the guide hole 313.

The mounting hole 311 may be understood as being created on a side of the mounting piece 31, the side being away from the connecting piece 40. Therefore, the guide hole 313 may be understood as being created on a side of the mounting piece 31, the side being close to the connecting piece 40. The mounting hole and the guide hole are coaxial and communicate with each other. An end of the driving piece 33, at which the threaded section 331 is created, may extend into the guide hole 313. Similarly, an end of the connecting piece 40, at which the threaded hole 41 is created, may also extend into the guide hole 313 and threadedly fit the threaded section 331. In this way, when the driving piece 33 rotates to drive the connecting piece 40 to move, the connecting piece 40 may move in the guide hole 313. The shape of the guide hole 313 may fit the shape of the connecting piece 40, thereby guiding the movement of the connecting piece 40.

In this embodiment, the guide hole 313 can guide the movement of the connecting piece 40, that is, guide the movement of the regulator 20, so that the regulator 20 can stably and effectively adjust the discharge flow rate of the discharge channel 11.

Referring to FIG. 2, in an embodiment of this application, a mounting groove 114 is created on an inner wall of the discharge channel 11. The mounting groove 114 communicates with the communicating hole 12. The regulator 20 is disposed in the mounting groove 114.

The mounting groove 114 may be created on one of the two opposite inner walls of the discharge channel 11 in the second direction, so that the regulator 20 is accommodated by the mounting groove 114. The mounting groove 114 may extend along the first direction. The at least two regulators 20 may be all disposed in the mounting groove 114.

In this embodiment, the mounting groove 114 provides a mounting space for the regulator 20, so as to improve convenience of disposing the regulator 20. Moreover, the mounting groove enables a relatively large size of the regulator 20, thereby increasing the strength of the regulator 20 and making it convenient for the regulator 20 to make stable adjustment subsequently.

Referring to FIG. 2, in an embodiment of this application, the coating die head 100 further includes a sealing element 50. The sealing element 50 is disposed between the regulator 20 and a wall of the mounting groove 114, and the wall communicates with the communicating hole 12.

The sealing element 50 may be configured to perform sealing between the regulator 20 and a wall of the mounting groove 114, where the wall communicates with the communicating hole 12. The sealing element 50 may be made of rubber, silicone, or the like, so that the sealing element is endowed with some elasticity. After being squeezed by the regulator 20, the sealing element deforms elastically to fit closely between the regulator 20 and the wall of the mounting groove 114, where the wall communicates with the communicating hole 12. In addition, the number of the sealing elements 50 may be one, and is designed to perform sealing between each of at least two regulators 20 and the wall of the mounting groove 114, where the wall communicates with the communicating hole 12. Alternatively, the number of the sealing elements 50 may correspond to the number of the regulators 20. In this case, one sealing element 50 performs sealing between one regulator 20 and the wall of the mounting groove 114, where the wall communicates with the communicating hole 12.

In this embodiment, by virtue of the sealing effect of the sealing element 50, even if an amount of slurry enters the mounting groove 114, the sealing effect of the sealing element 50 prevents the slurry from further penetrating into the communicating hole 12.

Referring to FIG. 1 and FIG. 3, in an embodiment of this application, in the first direction, a length value of the mounting piece 31 in each of the driving assemblies 30 is identical to a length value of a corresponding regulator 20.

The length value of the mounting piece 31 in each driving assembly 30 is identical to the length value of the corresponding regulator 20. In other words, the mounting pieces 31 are in one-to-one correspondence with the regulators 20, and the length of the mounting piece 31 in the first direction is consistent with the length of the corresponding regulator 20 in the first direction.

In this embodiment, the mounting pieces 31 are in one-to-one correspondence with the regulators 20, and the length is the same between the corresponding mounting piece and regulator, thereby making it convenient to also implement an accurate correspondence between the driving piece 33 disposed on the mounting piece 31 and the regulator 20, and in turn, enabling the driving piece 33 to effectively adjust the regulator 20. In addition, such arrangement also facilitates the operator to quickly determine, based on the correspondence, a driving piece 33 that needs to be operated, so as to appropriately adjust the regulator 20 that needs to be adjusted.

In an embodiment of this application, the mounting piece 31 in each of the driving assemblies 30 is detachably disposed on the die head body 10.

The mounting piece 31 being detachably disposed on the die head body 10 means that the mounting piece 31 can be detached from the die head body 10.

In this embodiment, the mounting piece 31 is detachable, regulators 20 of different sizes can be used through replacement, and the coating equipment can be conveniently adapted to coating layers of various sizes, that is, adapted to coating layers of different widths, thereby improving the flexibility of use of the coating equipment. In addition, when damaged, the driving assembly 30 or regulator 20 may be detached for repair or replacement, thereby improving the convenience of repair and replacement.

Referring to FIG. 1, FIG. 2, and FIG. 5, in an embodiment of this application, the coating die head 100 further includes a fixing bracket 60. The fixing bracket 60 includes a fixed base 61 and a press plate 63. The fixed base 61 is disposed on the die head body 10. The press plate 63 is detachably connected to the fixed base 61, and coordinates with the fixed base 61 to clamp and fix the mounting piece 31 in each of the driving assemblies 30.

Both the fixed base 61 and the press plate 63 may be elongated structures extending along the first direction, so as to clamp and mount at least two mounting pieces 31. The fixed base 61 and the press plate 63 may clamp a part of the mounting piece 31. In other words, the driving piece 33 may be disposed at an unclamped part in the mounting piece 31. Alternatively, the fixed base 61 and the press plate 63 may clamp the entire mounting piece 31.

In this embodiment, the mounting piece 31 is clamped and mounted by the fixing bracket 60 and the press plate 63, and no connecting structure for mounting the mounting piece needs to be disposed on the mounting piece 31, thereby ensuring high strength of each mounting piece 31. Moreover, after all mounting pieces 31 are mounted onto the fixed base 61 to form a structure, this structure may be mounted onto the die head body 10 at a single time, thereby improving the convenience of mounting the structure. However, this application is not limited to the examples given above. In another embodiment, each mounting piece 31 may be directly mounted on the die head body 10.

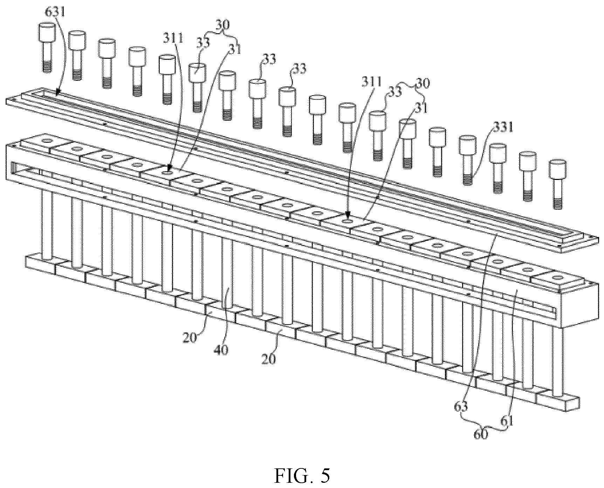

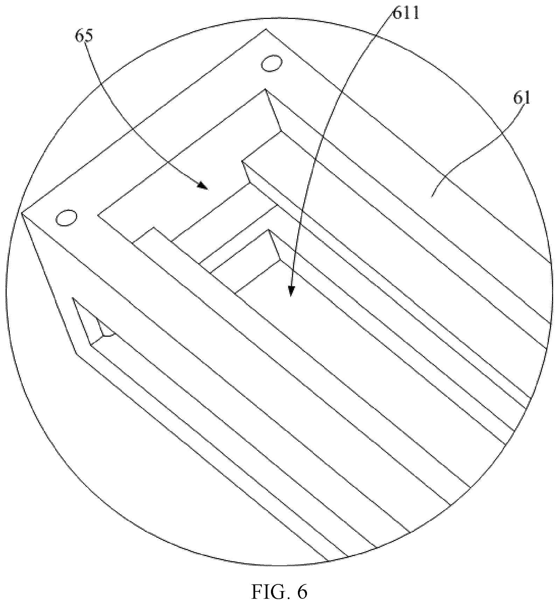

Referring to FIG. 5 and FIG. 6, in an embodiment of this application, the fixed base 61 and the press plate 63 close in to form an accommodation cavity 65. The mounting piece 31 is accommodated in the accommodation cavity 65. The fixed base 61 includes a first relief hole 611 that communicates with the accommodation cavity 65. An end of the connecting piece 40, away from the regulator 20, passes through the first relief hole 611, so as to be connected to the driving piece 33. The press plate 63 includes a second relief hole 631 that communicates with the accommodation cavity 65. An end of the driving piece 33, away from the connecting piece 40, passes through the second relief hole 631, so as to extend to the external environment.

The accommodation cavity 65 may be configured to accommodate the mounting piece 31 in each driving assembly 30. Therefore, in the first direction, the length of the accommodation cavity 65 is identical to the overall length of each mounting piece 31, so as to prevent the mounting pieces 31 from moving along the first direction and affecting the accuracy and stability of the mounting. The first relief hole 611 is available for being passed through by the connecting piece 40, and makes it convenient to connect the connecting piece 40 and the driving piece 33. The second relief hole 631 is available for being passed through by the driving piece 33, makes it convenient to expose a part of the driving piece 33 to the external environment, and makes it convenient for the operator to operate.

In this embodiment, the accommodating cavity 65 can adaptively accommodate the mounting piece 31, thereby improving the stability of the mounting of each mounting piece 31, and making it convenient for the driving assembly 30 to stably and effectively drive the regulator 20 subsequently. Moreover, the mounting piece 31 can be positioned quickly upon mounting the mounting pieces 31 in the accommodation cavity 65 one by one, thereby improving the convenience of mounting the driving assemblies 30.

Referring to FIG. 2, in an embodiment of this application, the coating die head 100 includes a first die head 13 and a second die head 15. The second die head 15 is detachably connected to the first die head 13. The second die head and the first die head 13 close in to form the discharge channel 11. The driving assemblies 30 and the communicating hole 12 are disposed on the first die head 13 and/or the second die head 15.

The first die head 13 and the second die head 15 may be distributed sequentially in the second direction, and may close in to form the discharge channel 11 after being connected to be a whole. The first die head 13 and the second die head 15 being detachably connected means that the first die head 13 and the second die head 15 can still be detached and separated from each other after being connected to be a whole. The first die head 13 and the second die head 15 may be connected by any means such as screwing, snap-connection, and magnetic fastening, so long as the first die head and the second die head can be detached and separated from each other. The driving assemblies 30 and the communicating hole 12 being disposed on the first die head 13 and/or the second die head 15 means that the driving assemblies 30 and the communicating hole 12 are disposed on just one of the first die head 13 or the second die head 15, or the driving assemblies 30 and the communicating hole 12 are disposed on both the first die head 13 and the second die head 15.

In this embodiment, the die head body 10 is split into the first die head 13 and the second die head 15, so that the two die heads can be manufactured separately and then assembled into a whole, so as to close in to form a discharge channel 11. The structures of the first die head 13 and the second die head 15 obtained by splitting are simpler than the integrated structure, thereby improving the convenience of manufacturing the die head body 10. In addition, the first die head 13 and the second die head 15 are detachably connected. Therefore, when the regulator 20 is damaged or the discharge channel 11 is jammed or the like, the first die head 13 and the second die head 15 can be detached, thereby improving the convenience of maintenance for the regulators 20 and the discharge channel 11.

Referring to FIG. 2 and FIG. 8, in an embodiment of this application, in the discharge direction of the discharge channel 11, the discharge channel 11 includes a body section 115 and an outlet section 116 that communicate with each other. A discharge port 111 is created at an end of the outlet section 116, the end being away from the body section 115. A cross-sectional area of the outlet section 116 of the discharge channel is less than a cross-sectional area of the body section 115 of the discharge channel. At least a part of the regulator 20 is movable within the outlet section 116.

The body section 115 may be a main middle part of the discharge channel 11, and the outlet section 116 is located downstream of the discharge channel 11 in contrast to the body section 115. After entering the outlet section 116, the slurry in the body section 115 can be extruded onto the substrate through an outlet at an end of the outlet section 116, the end being away from the body section 115. The cross-sectional area of the outlet section 116 of the discharge channel being less than the cross-sectional area of the body section 115 of the discharge channel may mean that the distance between two inner walls of the outlet section 116 of the discharge channel in the second direction is less than the distance between two inner walls of the body section 115 of the discharge channel in the second direction.

In this embodiment, because the outlet section 116 is closer to the outlet than the body section 115, after the slurry flow rate in a specified region is adjusted by the regulator 20, the slurry can be quickly extruded from the discharge port 111 to form a coating layer of a desired thickness, thereby being not prone to inflow of slurry from other positions.

Referring to FIG. 1 to FIG. 8, in an embodiment of this application, the coating die head 100 includes a die head body 10, a fixing bracket 60, at least two driving assemblies 30, at least two regulators 20, and at least two connecting pieces 40. The die head body 10 may include a first die head 13 and a second die head 15. The second die head 15 is detachably connected to the first die head 13. The second die head and the first die head 13 close in to form the discharge channel 11. The discharge channel 11 includes a discharge port 111. The discharge port 111 extends along a first direction, and the first direction intersects a discharge direction of the discharge channel 11. The fixing bracket 60 is disposed outside the die head body 10. The fixing bracket 60 includes a fixed base 61 and a press plate 63. The fixed base 61 is connected to the die head body 10. The press plate 63 is detachably connected to the fixed base. The press plate and the fixed base 61 close in to form an accommodation cavity 65. The driving assembly 30 includes a mounting piece 31 and a driving piece 33. All the mounting pieces 31 are disposed in the accommodation cavity 65 and arranged sequentially along the first direction. Each driving piece 33 is rotatably mounted in a mounting hole 311 of the corresponding mounting piece 31. One end of the driving piece 33 passes through a second relief hole 631 of the press plate 63, and extends to the external environment. A threaded section 331 is formed at the other end of the driving piece, and extends into a guide hole 313 created on the mounting piece 31, where the guide hole is connected to the mounting hole 311 and coaxial with the mounting hole 311. The at least two regulators 20 are all disposed in the mounting groove 114 disposed in the discharge channel 11. Each regulator 20 is disposed corresponding to one mounting piece 31, and is identical to the corresponding mounting piece 31 in length in the first direction. One end of the connecting piece 40 is connected to the regulator 20, and the other end of the connecting piece passes through the communicating hole 12 created on the die head body 10 and communicating with the mounting groove 114 and the external environment, and further passes through the relief hole on the fixed base 61 and extends into the guide hole 313 of the mounting piece 31. A threaded hole 41 is created at an end of the connecting piece 40, the end extending into the guide hole 313. Through the threaded hole 41, the connecting piece threadedly fits the threaded section 331 of the driving piece 33. In this way, the rotation of the driving piece 33 can drive the connecting piece 40 to move along a second direction perpendicular to both the discharge direction and the first direction, thereby causing the regulator 20 to move in the discharge channel 11, and adjusting the discharge flow rate of the discharge channel 11. In addition, a sealing element 50 is disposed between the regulator 20 and the wall of the mounting groove 114, where the wall communicates with the communicating hole 12. Further, the discharge channel 11 includes a main coating region 112 and an edge region 113 in the first direction. The edge region 113 is located at an edge of the main coating region 112. The regulator 20 is disposed in both the main coating region 112 and the edge region 113. In the first direction, a length value of the regulator 20 located in the main coating region 112 is set to be different from a length value of the regulator 20 located in the edge region 113. In the first direction, the length value of the regulator 20 located in the main coating region 112 is greater than the length value of the regulator 20 located in the edge region 113. The number of the regulators 20 located in the main coating region 112 is less than the number of the regulators 20 located in the edge region 113. A plurality of regulators 20 are disposed in the main coating region 112. In the first direction, length values of the regulators 20 located in the main coating region 112 are set to be all identical or partially identical. A plurality of regulators 20 are disposed in the edge region 113. In the first direction, the length values of the regulators 20 located in the edge region 113 are set to be all identical.

This application further discloses a piece of coating equipment. The coating equipment includes a coating die head 100. For the specific structure of the coating die head 100, reference may be made to the preceding embodiments. The coating equipment employs all the technical solutions of all the preceding embodiments, the coating equipment at least achieve all the beneficial effects brought by the technical solutions of the preceding embodiments, the details of which are omitted here.

What is described above is merely some exemplary embodiments of this application, and does not hereby limit the patent scope of this application in any way. All equivalent structural variations made by using the content of the specification and the drawings of this application, and direct or indirect use of the technical solutions hereof in other related technical fields without departing from the conception of this application, still fall within the patent protection scope of this application.

## Claims

1. A coating die head, comprising:
a die head body, wherein a discharge channel communicating with an external environment is disposed on the die head body, the discharge channel comprises a discharge port, the discharge port extends along a first direction, and the first direction intersects a discharge direction of the discharge channel; and
at least two regulators, wherein the at least two regulators are disposed on the die head body and distributed along the first direction, at least a part of each regulator is movable in the discharge channel along a second direction, the second direction is perpendicular to the discharge direction and the first direction, and a dimension along the first direction differs between the at least two regulators.

2. The coating die head according to claim 1, wherein the discharge channel comprises a main coating region and an edge region in the first direction, the edge region is located at an edge of the main coating region, and the regulator is disposed in both the main coating region and the edge region.

3. The coating die head according to claim 2, wherein, in the first direction, a length value of the regulator located in the main coating region is set to be different from a length value of the regulator located in the edge region.

4. The coating die head according to claim 3, wherein, in the first direction, the length value of the regulator located in the main coating region is greater than the length value of the regulator located in the edge region.

5. The coating die head according to claim 3 or 4, wherein a number of the regulators located in the main coating region is less than a number of the regulators located in the edge region.

6. The coating die head according to any one of claims 2 to 5, wherein a plurality of regulators are disposed in the main coating region, and, in the first direction, length values of the regulators located in the main coating region are set to be all identical or partially identical.

7. The coating die head according to any one of claims 2 to 6, wherein a plurality of regulators are disposed in the edge region, and, in the first direction, length values of the regulators located in the edge region are set to be all identical.

8. The coating die head according to any one of claims 1 to 7, wherein the coating die head further comprises at least two driving assemblies, the at least two driving assemblies are all disposed on an outer surface of the die head body, and the driving assemblies are configured to drive the regulators to move.

9. The coating die head according to claim 8, wherein the coating die head further comprises a connecting piece, the connecting piece connects the driving assembly and the regulator, the die head body further comprises a communicating hole that communicates with the discharge channel, and the connecting piece passes through the communicating hole and is connected to the regulator.

10. The coating die head according to claim 9, wherein each of the driving assemblies comprises:
a mounting piece, wherein the mounting piece is disposed on the die head body; and
a driving piece, wherein the driving piece is connected to the mounting piece and connected to the connecting piece, and the driving piece is able to drive the connecting piece to move, so as to cause the regulator to move.

11. The coating die head according to claim 10, wherein a mounting hole is created on the mounting piece, the driving piece is rotatably threaded through the mounting hole, and one of a threaded section or a threaded hole is formed at an end of the driving piece, the end being close to the regulator; and
the other of the threaded section or the threaded hole is formed at an end of the connecting piece, the end being away from the regulator; and the threaded section is inserted in the threaded hole so that, when rotating, the driving piece drives the connecting piece to move.

12. The coating die head according to claim 11, wherein the driving piece comprises the threaded section, and the connecting piece comprises the threaded hole; and
the mounting piece further comprises a guide hole, wherein the guide hole communicates with the mounting hole and is coaxial with the mounting hole, and an end of the connecting piece, at which the threaded hole is created, is inserted in the guide hole.

13. The coating die head according to any one of claims 9 to 12, wherein a mounting groove is created on an inner wall of the discharge channel, the mounting groove communicates with the communicating hole, and the regulator is disposed in the mounting groove.

14. The coating die head according to claim 13, wherein the coating die head further comprises a sealing element, the sealing element is disposed between the regulator and a wall of the mounting groove, and the wall communicates with the communicating hole.

15. The coating die head according to any one of claims 10 to 14, wherein, in the first direction, a length value of the mounting piece in each of the driving assemblies is identical to a length value of a corresponding regulator.

16. The coating die head according to any one of claims 9 to 15, wherein the mounting piece in each of the driving assemblies is detachably disposed on the die head body.

17. The coating die head according to claim 16, wherein the coating die head further comprises a fixing bracket, and the fixing bracket comprises:
a fixed base, wherein the fixed base is disposed on the die head body; and
a press plate, wherein the press plate is detachably connected to the fixed base, and coordinates with the fixed base to clamp and fix the mounting piece in each of the driving assemblies.

18. The coating die head according to claim 17, wherein the fixed base and the press plate close in to form an accommodation cavity, and the mounting piece is accommodated in the accommodation cavity;
the fixed base comprises a first relief hole that communicates with the accommodation cavity, and an end of the connecting piece, away from the regulator, passes through the first relief hole, so as to be connected to a driving piece; and
the press plate comprises a second relief hole that communicates with the accommodation cavity, and an end of the driving piece, away from the connecting piece, passes through the second relief hole, so as to extend to the external environment.

19. The coating die head according to any one of claims 9 to 18, wherein the coating die head comprises:
a first die head; and
a second die head, wherein the second die head is detachably connected to the first die head, the second die head and the first die head close in to form the discharge channel, and the driving assemblies and the communicating hole are disposed on the first die head and/or the second die head.

20. The coating die head according to any one of claims 1 to 19, wherein, in the discharge direction of the discharge channel, the discharge channel comprises a body section and an outlet section that communicate with each other, and the discharge port is created at an end of the outlet section, the end being away from the body section; and
a cross-sectional area of the outlet section of the discharge channel is less than a cross-sectional area of the body section of the discharge channel, and at least a part of the regulator is movable within the outlet section.

21. A piece of coating equipment, comprising the coating die head according to any one of claims 1 to 20.
